# EUROPÄISCHE PATENTSCHRIFT

(11) **EP 0 309 610 B1**
(45) Veröffentlichungstag und Bekanntmachung des Hinweises auf die Patenterteilung: **07.01.1993**
(21) Anmeldenummer: 87114403.6
(22) Anmeldetag: 02.10.1987
(51) Int. Cl.: H04N 5/06

(54) **Digitale Erzeugung von Vertikalsynchron- und Halbbild-Identifikationssignalen**
Digital generation of vertical synchronizing and frame-identifying signals
Génération numérique de signaux de synchronisation verticale et d'identification de trame

(43) Veröffentlichungstag der Anmeldung: 05.04.1989
(73) Patentinhaber: Deutsche ITT Industries GmbH, 79108 Freiburg (DE)
(72) Erfinder: Sieben, Ulrich, Dr. Dipl.-Phys., D-7801 Reute (DE); Schemmann, Heinrich, Dipl.-Ing., D-5300 Bonn-Niederholtdorf (DE)

(56) Entgegenhaltungen:
- US-A- 3 485 950
- PATENT ABSTRACTS OF JAPAN, Band 5, Nr. 167 (E-79)[839], 24. Oktober 1981; & JP-A-56 96 577 (TOKYO SHIBAURA DENKI K.K.) 04-08-1981

## Beschreibung

Die Erfindung betrifft eine Digitalschaltung zur Erzeugung des Vertikalsynchronsignals und von Identifikationssignalen für das erste und das zweite Halbbild in digitalen Fernsehempfängern. Im Stand der Technik werden diese Signale entweder analog (US-A-3 485 950) oder digital mittels einer eigenen vom Horizontaloszillator getrennten Teilschaltung für jedes einzelne Signal (Patent Abstracts of Japan, Band 5, Nr. 167 & JP-A-56 96 577) erzeugt.

Erfindungsgemäß wird der als PLL-Schleife ausgebildet Horizontaloszillator, der analogen Impulsen mit dem Impuls-Pausen-Verhältnis 1:1 entsprechende interne Horizontalsynchronsignale und digitale Horizontalablenksignale erzeugt, entsprechend dem Patentanspruch ausgebildet. Dadurch läßt sich vermeiden, daß die interne Vertikalsynchronsignal-Erzeugung und die Erzeugung der Halbbild-Identifikationssignale mittels jeweils vom Horizontaloszillator getrennten Teilschaltungen durchgeführt werden müssen.

Es ergibt sich somit eine Schaltungsaufwandreduzierung, was wiederum zu einer verbesserten Flächenausnutzung bei der Realisierung der Erfindung als monolithisch integrierte Halbleiterschaltung führt. Auch die der an sich bekannten internen Vertikalsynchronsignal-Erzeugung inhärenten Vorteile treten bei der Erfindung auf.

Anhand der Figuren der Zeichnung wird die Erfindung nun näher erläutert.
Fig. 1 zeigt das stark schematisierte Blockschaltbild eines Ausführungsbeispiels der Erfindung, und
Fig. 2 zeigt verschiedene Kurvenformen zur Erläuterung der Wirkungsweise der Erfindung.

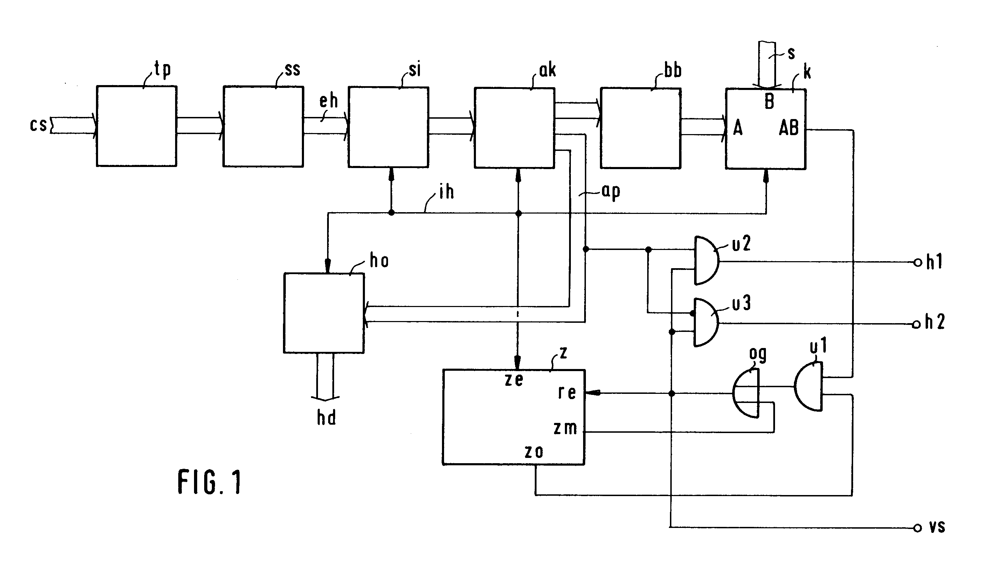

Für das schematisierte Blockschaltbild des Ausführungsbeispiels nach Fig. 1 wird vorausgesetzt, daß, wie dies bei digitalen Fernsehempfängern bekannt und üblich ist, mittels eines von einem Systemtakt getakteten Analog-Digital-Wandlers aus dem analogen FBAS-Signal das digitale FBAS-Signal cs erzeugt ist, das somit die Chrominanz-, die Luminanz-, die Farbsynchron-, die Horizontalsynchron- und die Vertikalsynchronsignale enthält. Aus diesem Signal wird mittels des Tiefpasses tp der Videoanteil unterdrückt, und mittels der digitalen Synchronimpulsabtrennschaltung ss, die dem Tiefpaß tp nachgeschaltet ist, werden die externen Synchronsignale eh, also die abgetrennten Horizontal- und Vertikalsynchronsignale, gewonnen.

Der Horizontaloszillator ho der PLL-Schleife gibt das interne Horizontalsynchronsignal ih ab, das im synchronen Zustand das Impuls-Pausen-Verhältnis 1:1 hat. Außer diesem internen Horizontalsynchronsignal ih gibt der Horizontaloszillator ho auch noch die der Vollständigkeit halber in Fig. 1 angedeuteten digitalen Horizontalablenksignale hd ab, die in üblicher Weise zur Erzeugung der analogen Ablenksignale für die Bildröhre des Fernsehempfängers weiterverarbeitet werden, was jedoch im Rahmen der Erfindung nicht von Interesse ist.

Die externen Horizontalsynchronsignale eh die, wie erwähnt, am Ausgang der Synchronimpulsabtrennschaltung ss entstehen, liegen am Signaleingang des Vorzeicheninvertierers si. Seinem Steuereingang ist das interne Horizontalsynchronsignal ih zugeführt, und zwar derart, daß die Stellenzahl der Eingangssignale um eine Vorzeichenstelle erweitert wird, wobei die Einsen der externen Synchronsignale eh einen einem positiven Vorzeichen entsprechenden Binärpegel in der Vorzeichenstelle, dagegen deren Nullen einen einem negativen Vorzeichen entsprechenden Binärpegel erzeugen. Bei der weit verbreitet verwendeten Zweierkomplement-Darstellung von Dualzahlen wird also ein der Null entsprechender Binärpegel in der Vorzeichenstelle erzeugt, wenn die erwähnten Einsen auftreten, und ein der Eins entsprechender Binärpegel, wenn die erwähnten Nullen auftreten.

Das vorzeichenbehaftete Ausgangssignal des Vorzeicheninvertierers si ist dem Eingang des Akkumulators ak zugeführt, der somit als ebenfalls am erwähnten Taktsystem betriebene Teilschaltung während jeder Halbperiode des internen Horizontalsynchronsignals entweder positive oder negative Dualzahlen aufsummieren kann. Dem Reset- und Auslese-Eingang des Akkumulators ak ist das interne Horizontalsynchronsignal ih derart zugeführt, daß nur bei dessen positiven Flanken das akkumulierte Signal ap an den Steuereingang des Horizontaloszillators ho gelangt und der Akkumulator nach diesem Auslesen zurückgesetzt wird, daß jedoch bei dessen positiven und negativen Flanken das Akkumulationsergebnis an den Betragsbildner bb ausgelesen wird. Somit wird der Horizontaloszillator ho exakt auf die Zeilenfrequenz synchronisiert, und im Akkumulator ak werden nur dann große Zahlenwerte auftreten, wenn die einem Halbbildwechsel zugeordnete Polaritätsumkehr der externen Horizontalsynchronsignale auftritt, wie dies bei den derzeit üblichen Fernsehstandards der Fall ist.

Der Betragbildner bb bildet von seinen negativen Eingangssignalen im mathematischen Sinn den Betrag, so daß in dessen Ausgangssignal die Vorzeichenstelle entfallen bzw. diese nur das positive Vorzeichen führen und der Zahlenwert entsprechend der gewählten Zahlendarstellung in die Darstellung positiver Zahlen überführt wird.

Das Ausgangssignal des Betragsbildners bb ist dem Minuend-Eingang A des Komparators k zugeführt. Der Schwellwert s, der z.B. etwa beim halben positiven erreichbaren Maximalwert des Ausgangssignals des Akkumulators ak liegt, ist dem Subtrahend-Eingang B zugeführt.

Ferner ist bei der Anordnung nach Fig. 1 der Zähler z vorgesehen, dessen Zähleingang ze das interne Horizontalsynchronsignal ih derart zugeführt ist, daß bei jeder seiner Flanken gezählt wird. Bei der für den PAL-Standard genormten Zeilenfrequenz von 15,625 kHz zählt also der Zähler z mit einer Frequenz von 31,25 kHz. Seine Zählkapazität ist geringfügig höher, als es einer Halbbilddauer entspricht; er hat also eine Zählkapazität, die geringfügig größer als 625, also z.B. gleich 640, ist.

Der Minuend-größer/gleich-Subtrahend-Ausgang AB des Komparators k liegt am einen Eingang des ersten UND-Gatters u1 und sein anderer Eingang an den Zählerstandausgängen zo des oberen Drittels der Zählkapazität des Zählers z; im obigen Beispiel des PAL-Standards also z.B. an den Zählerstandausgängen größer 448. Der Ausgang des UND-Gatters u1 führt zum einen Eingang des ODER-Gatters og, dessen anderer Eingang mit dem höchsten Zählerstandausgang zm verbunden ist, also im genannten Beispiel mit dem Zählerstand 640. Der Ausgang des ODER-Gatters og ist mit dem RESET-Eingang re des Zählers z verbunden und liefert zugleich die Vertikalsynchronsignale vs.

Dem einen Eingang des zweiten UND-Gatters u2 ist das Signal der Vorzeichenstelle des Ausgangssignals des Akkumulators ak zugeführt, und sein anderer Eingang liegt am Ausgang des ODER-Gatters og. Dem einen Eingang des dritten UND-Gatters u3 ist das invertierte Signal der Vorzeichenstelle des Ausgangssignals des Akkumulators ak zugeführt, und sein anderer Eingang liegt ebenfalls am Ausgang des ODER-Gatters og.

Der Ausgang des zweiten UND-Gatters u2 liefert das Identifikationssignal h1 für das erste Halbbild und der Ausgang des dritten UND-Gatters u3 das Identifikationssignal h2 für das zweite Halbbild.

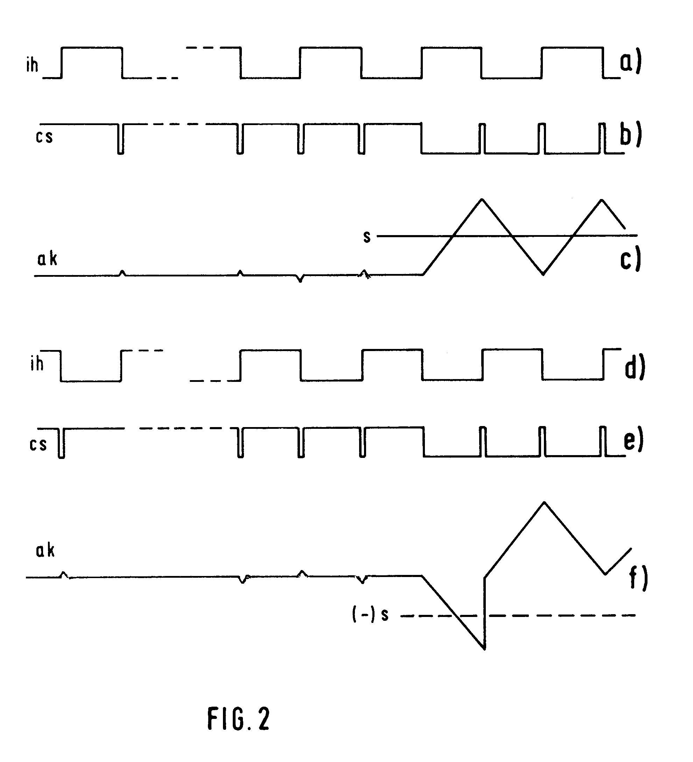

Die Figuren 2a bis c bzw. 2d bis f zeigen jeweils den Verlauf des internen Horizontalsynchronsignals ih des digitalen FBAS-Signals cs und des Ausgangssignals des Akkumulators ak im Bereich der gesendeten Vertikalsynchronimpulse für das erste bzw. zweite Halbbild. In Fig. 2b ändert sich die Polarität des Signals cs mit einer steigenden Flanke des Signals ih während dies in Fig. 2e für eine fallende Flanke des Signals ih zutrifft.

Vor diesem Polaritätswechsel Wechsel treten am Ausgang des Akkumulators ak nur geringfügige Zahlenwerte auf, während danach der Akkumulator bis zum erwähnten Maximalwert aufsummiert. Somit tritt vor dem Polaritätswechsel am Ausgang AB des Komparators kein Signal auf, so daß der Zähler z erst beim Erreichen des maximalen Zählerstands zurückgesetzt wird. Dieser Ablauf tritt auch auf, wenn überhaupt keine externen Horizontalsynchronimpulse vorliegen.

Nach dem erwähnten Polaritätswechsel summiert der Akkumulator ak jedoch auf, so daß nach Überschreiten der Schwelle s ein Signal am Ausgang AB des Komparators k auftritt, das dann zum einen Eingang des ODER-Gatters og durchgeschaltet wird, wenn der Zähler z sich im oberen Drittel seiner Zählerstände befindet, wodurch er dann zurückgesetzt wird und welches Signal das Vertikalsynchronsignal ist. Liegt dieses eben erwähnte Signal vor, so wird bei positivem Vorzeichen am Ausgang des Akkumulators ak das zweite UND-Gatter u2 durchgeschaltet, so daß das Identifikationssignal h1 für das erste Halbbild entsteht, dagegen entsteht am Ausgang des dritten UND-Gatters u3 das Identifikationssignal h2 für das zweite Halbbild, wenn das Ausgangssignal des Akkumulators ak negativ ist.

In Fig. 2f ist im Gegensatz zu Fig. 2c der Schwellwert s auf der negativen Seite der Nullinie eingetragen, und zwar weil diese beiden Figuren ja das Ausgangssignal des Akkumulators ak zeigen, der Schwellwert s aber dem Komparator k, der hinter dem Betragsbildner bb liegt zugeführt ist. Die Wirkung des positiven Schwellwerts s bei einem negativen Akkumulatorausgangssignal ist der Wirkung eines negativen Schwellwerts (-)s gleich.

Die Digitalschaltung nach der Erfindung eignet sich insbesondere zur Realisierung in der Technik monolithisch integrierter Isolierschicht-Feldeffektransistorschaltungen, also zur Realisierung in der sogenannten MOS-Technik.

## Patentansprüche

1. Digitalschaltung zur Erzeugung des Vertikalsynchronsignals (vs) und von Identifikationssignalen (h1, h2) für das erste und das zweite Halbbild in digitalen Fernsehempfängern
- mit einem als PLL-Schleife ausgebildeten digitalen Horizontaloszillator (ho), der interne Horizontalsynchronsignale (ih) mit dem Impuls-Pausen-Verhältnis 1:1 im synchronen Zustand und digitale Horizontalablenksignale (hd) erzeugt,
- mit einem die Videoanteile des digitalen FBAS-Signals (cs) unterdrückenden Tiefpaß (tp),
- mit einer digitalen Synchronimpulsabtrennschaltung (ss), die dem Tiefpaß (tp) nachgeschaltet ist,
- mit einem Vorzeicheninvertierer (si), dessen Signaleingang die abgetrennten Horizontal- und Vertikalsynchronsignale (eh) (= externe Synchronsignale) und dessen Steuereingang das interne Horizontalsynchronsignal (ih) zur derartigen Erweiterung der Stellenzahl um eine Vorzeichenstelle zugeführt sind, daß die Einsen der internen Synchronsignale (ih) einen einem positiven Vorzeichen entsprechenden Binärpegel in der Vorzeichenstelle, dagegen deren Nullen einen einem negativen Vorzeichen entsprechenden Binärpegel erzeugen,
- mit einem Akkumulator (ak), der dem Vorzeicheninvertierer (si) nachgeschaltet ist und dessen Reset- und Ausleseeingang das interne Horizontalsynchronsignal (ih) derart zugeführt ist, daß nur bei dessen positiven Flanken das akkumulierte Ausganssignal des Vorzeicheninvertierers an den Steuereingang des Horizontaloszillators (ho) übernommen und der Akkumulator zurückgesetzt wird.
- mit einem Betragsbildner (bb), der dem Akkumulator (ak) nachgeschaltet ist und bei jeder Flanke des internen Horizontalsynchronsignals (ih) das akkumulierte Signal zugeführt erhält,
- mit einem Komparator (k), dessen Minuend-Eingang (A) am Ausgang des Betragsbildners (bb) liegt und dessen Subtrahend-Eingang (B) ein Schwellwert (s) zugeführt ist, der etwa beim halben positiven erreichbaren Maximalwert des Ausgangssignals des Akkumulators (ak) liegt,
- mit einem Zähler (z), dessen Zähleingang (ze) das interne Horizontalsynchronsignal (ih) derart zugeführt ist, daß bei jeder seiner Flanken gezählt wird, und dessen Zählkapazität geringfügig höher ist, als einer Halbbilddauer entspricht,
- mit einem ersten UND-Gatter (u1), dessen einer Eingang am Minuend-größer/gleich-Subtrahend-Ausgang (AB) des Komparators (k) und dessen anderer Eingang an einem Zählerstandausgang (zo) des oberen Drittels der Zählkapazität liegt,
- mit einem ODER-Gatter (og), dessen einer Eingang mit dem Ausgang des ersten UND-Gatters (u1) und dessen anderer Eingang mit dem höchsten Zählerstandausgang (zm) verbunden ist sowie dessen Ausgang die Vertikalsynchronsignale (vs) liefert und mit dem Reset-Eingang (re) des Zählers (z) verbunden ist,
- mit einem zweiten UND-Gatter (u2), dessen einem Eingang das Signal der Vorzeichenstelle des Ausgangssignals des Akkumulators (ak) zugeführt ist und das das Identifikationssignal (h1) für das erste Halbbild liefert, und
- mit einem dritten UND-Gatter (u3), dessen einem Eingang das invertierte Signal der Vorzeichenstelle des Ausgangssignals des Akkumulators (ak) zugeführt ist und dessen anderer Eingang zusammen mit dem des zweiten UND-Gatters (u2) am Ausgang des ODER-Gatters (og) liegt und das das Identifikationssignal (a2) für das zweite Halbbild liefert.

## Claims

1. Digital circuit for generating the vertical synchronizing signal (vs) and identification signals (h1, h2) for the first and second fields in digital television receivers, comprising
- a digital horizontal oscillator (ho) in the form of a phase-locked loop which produces internal horizontal synchronizing signals (ih) with a 1:1 mark/space ratio in the synchronous state and digital horizontal deflection signals (hd),
- a low-pass filter (tp) suppressing the video components of the digital composite color signal (cs),
- a digital sync separator (ss) following the low-pass filter (tp),
- a sign inverter (si) whose signal input is fed by the separated horizontal and vertical synchronizing signals (eh) (= external synchronizing signals), and whose control input is fed by the internal horizontal synchronizing signal (ih) for adding a sign bit so that the 1s of the internal synchronizing signals (ih) produce in the sign bit a binary level representing a positive sign, while the Os produce a binary level representing a negative sign,
- an accumulator (ak) which follows the sign inverter (si), and whose reset and output-enbable input is fed by the internal horizontal synchronizing signal (ih) in such a way that the accumulated output-signal of the sign inverter is transferred to the control input of the horizontal oscillator (ho) and the accumulator is reset only on the positive-going edges of the internal horizontal synchronizing signal (ih),
- an absolute-value device (bb) which follows the accumulator (ak) and is fed by the accumulated signal on each edge of the internal horizontal synchronizing signal (ih),
- a comparator (k) whose minuend input (A) in connected to the output of the absolute-value device (bb), and whose subtrahend input (B) is fed by a threshold value (s) equal to about half the positive maximum value of the output signal of the accumulator (ak),
- a counter (z) whose count input (ze) is fed by the internal horizontal synchronizing signal (ih) so that the counter (z) counts on each edge of the internal horizontal synchronizing signal (ih), and whose count capacity is slightly greater than that required for one field period,
- a first AND gate (u1) one input of which is connected to the minuend-greater-than/equal-to-subtrahend output (AB) of the comparator (k), and the other input of which is connected to one of the count outputs (zo) of the upper third of the count capacity,
- an OR gate (og) one input of which is connected to the output of the first AND gate (u1) and the other input of which is connected to the maximum count output (zm), and the output of which provides the vertical synchronizing signals (vs) and is connected to the reset input (re) of the counter (z),
- a second AND gate (u2) having the sign bit of the output signal of the accumulator (ak) applied to one of its inputs and delivering the identification signal (h1) for the first field, and
- a third AND gate (u3) one input of which is fed by the sign bit of the output signal of the accumulator (ak), and the other input of which, together with that of the second AND gate (u2), is connected to the output of the OR gate (og), and which provides the identification signal (h2) for the second field.

## Revendications

1. Circuit numérique pour la production du signal de synchronisation verticale (vs) et de signaux d'identification (h1,h2) pour les première et seconde trames dans des récepteurs de télévision numériques, comportant
- un oscillateur horizontal numérique (ho), réalisé sous la forme d'une boucle PLL et qui produit des signaux internes de synchronisation horizontale (ih) avec un rapport impulsion/pause entre impulsions 1:1 à l'état synchrone, et des signaux numériques de déviation horizontale (he),
- un filtre passe-bas (tp) qui supprime les composantes vidéo du signal complet numérique de télévision (cs),
- un circuit numérique (ss) de séparation des impulsions de synchronisation, qui est branché en aval du filtre passe-bas (tp),
- un inverseur de signe (si), à l'entrée du signal duquel sont envoyés les signaux séparés de synchronisation horizontale et de synchronisation verticale (eh) (= signaux externes de synchronisation) et à l'entrée de commande duquel est envoyé le signal interne de synchronisation horizontale (ih) pour réaliser un accroissement du nombre de positions, d'une position de signe de telle sorte que les uns des signaux internes de synchronisation (ih) produisent le niveau binaire correspondant à un signe positif dans la position du signe, tandis que les zéros de ces signaux produisent un niveau binaire qui correspond à un signe négatif,
- un accumulateur (ak), qui est branché en aval de l'inverseur de signe (si) et à l'entrée de remise à l'état initial et à l'entrée de lecture duquel le signal interne de synchronisation horizontale (ih) est envoyé de telle sorte que seulement lors de l'apparition des flancs positifs de ce signal, le signal de sortie cumulé de l'inverseur de signe est pris en charge au niveau de l'entrée de commande de l'oscillateur horizontal (ho) et l'accumulateur est ramené à l'état initial,
- un dispositif de formation de valeurs absolues (bb), qui est branché en aval de l'accumulateur (ak) et reçoit le signal cumulé, lors de l'apparition de chaque flanc du signal interne de synchronisation horizontale (ih),
- un comparateur (k), dont l'entrée du minuende (A) est raccordée à la sortie du dispositif de formation de valeurs absolues (bb) et à l'entrée (B) du nombre à soustraire duquel est envoyée une valeur de seuil (s), qui est égale approximativement à la moitié de la valeur maximale positive pouvant être atteinte du signal de sortie de l'accumulateur (ak),
- un compteur (z), à l'entrée de comptage (ze) duquel le signal interne de synchronisation horizontale (ih) est envoyé de telle sorte que, lors de l'apparition de chacun des flancs de ce signal, un comptage est exécuté, et dont la capacité de comptage et légèrement supérieure à ce qui correspond à la durée d'une trame,
- une première porte ET (u₁), dont une entrée est raccordée à la sortie "minuende supérieur/égal au nombre à soustraire" (AB) du comparateur (k) et dont l'autre entrée est raccordée à une sortie (zo) de l'état de comptage du tiers supérieur de la capacité de comptage,
- une porte OU (og), dont une entrée est raccordée à la sortie de la première porte ET (u1) et dont une autre entrée est raccordée à la sortie la plus élevée (zm) de l'état de comptage et dont la sortie délivre les signaux de synchronisation verticale (vs) et est raccordée à l'entrée de remise à zéro (re) du compteur (z),
- une seconde porte ET (u2), à une entrée de laquelle est envoyé le signal de la position de signe du signal de sortie de l'accumulateur (ak) et qui fournit le signal d'identification (h1) pour la première trame, et
- une troisième porte ET (u3), à une entrée de laquelle est envoyé le signal inversé de la position de signe du signal de sortie de l'accumulateur (ak) et dont l'autre entrée est raccordée, conjointement avec l'entrée de la seconde porte ET (u2), à la sortie de la porte OU (og) et qui fournit le signal d'identification (a2) pour la seconde trame.
